(19) Europäisches Patentamt
European Patent Office
Office européen des brevets

(11) Publication number: **0 197 532 B1**

(12) **EUROPEAN PATENT SPECIFICATION**

(45) Date of publication of patent specification: **18.03.92**

(51) Int. Cl.$^5$: **G11B 5/127**, //G11B5/31

(21) Application number: **86104709.0**

(22) Date of filing: **07.04.86**

# (54) Magnetic head.

(30) Priority: **08.04.85 JP 73877/85**

(43) Date of publication of application:
**15.10.86 Bulletin 86/42**

(45) Publication of the grant of the patent:
**18.03.92 Bulletin 92/12**

(84) Designated Contracting States:
**DE FR GB**

(56) References cited:
**EP-A- 0 106 321**
**WO-A-84/03167**
**FR-A- 2 099 132**
**US-A- 3 577 634**

**PATENT ABSTRACTS OF JAPAN, vol. 4, no. 160, (P-35)[642], 8th November 1980, page 137 P 35; & JP-A-55 108 922 (TOKYO DENKI KAGAKU KOGYO K.K.) 21-08-1980**

(73) Proprietor: **MATSUSHITA ELECTRIC INDUSTRIAL CO., LTD.**
**1006, Oaza Kadoma**
**Kadoma-shi, Osaka-fu, 571(JP)**

(72) Inventor: **Satomi, Mitsuo**
**52-4, Kisabe 6-chome**
**Katano City, 576(JP)**
Inventor: **Kaminaka, Nobuyuki**
**676-59, Oaza-Neya**
**Neyagawa City, 572(JP)**

(74) Representative: **Dr. Elisabeth Jung Dr. Jürgen Schirdewahn Dipl.-Ing. Claus Gernhardt**
**P.O. Box 40 14 68 Clemensstrasse 30**
**W-8000 München 40(DE)**

**EP 0 197 532 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

BACKGROUND OF THE INVENTION

1. FIELD OF THE INVENTION

The present invention relates to a magnetic head, and especially to a magnetic head having such a constitution that magnetic material is sandwiched on both sides thereof by substrate material, as is stated in the precharacterising portion of claim 1.

2. DESCRIPTION OF THE PRIOR ART

Ferrite is conventionally used as a material of magnetic head core, for the reason that it has superior workability and resistance to wear, but its saturation magnetization is 30--50 % lower than that of alloy materials. The saturation magnetization of the material of head core becomes a problem in the case when ferrite is used for a head core for a media of high density (high coercive force) recording which has appeared in recent years, and from such point of view, a sendust or an amorphous alloy are used am materials of core for the media of high density recording.

On the contrary, amorphous alloy for magnetic head is in the limelight because of its superior resistance to wear and magnetic characteristic. The amorphous alloy is suitable for making thin film less than 50 μm because of its manufacturing characteristic. Furthermore, a metal such as an amorphous alloy, has a much smaller specific resistance than that of ferrite, and eddy currant loss of metal in high frequency regions is larger than that of ferrite, so that amorphous alloy is convenient in these points. Such sole thin sheet film has, however, problems in machine working or in strength for constituting a magnetic head. Accordingly, a magnetic head having such a constitution that the thin film is sandwiched on both sides thereof by a substrate material of superior resistance to wear, is in ordinary practical use. Hereupon, bonding of magnetic material and substrate material is likely to cause trouble. Organic adhesive, is easy to handle, and easy to heat for hardening, but it must have at least some thickness for having practical intensity (for example, it is in the order of several tens of microns). Furthermore, it has poor reliability in changing the temperature and humidity after the bonding, so that it is difficult to maintain the characteristic of a magnetic head having a narrow gap length, which is used for a video tape recorder and the like. Such a conventional constitution of the magnetic head is e.g. shown in EP-A-0 106 321.

The most reliable bonding is the bonding by melted glass through conventional bonding methods.

On the other hand, the case considering the magnetic characteristic of amorphous alloy is described in the following. FIG.2 shows the relation between magnetization $\sigma$ and temperature T. As shown in FIG.2, generally the magnetization becomes naught at Curie temperature Tc. Showing of the magnetization again near the crystallization temperature Tx, is due to the fact that the crystalline alloy shows the magnetic characteristic again.

When the magnetic characteristic of the magnetic material is considered for using a magnetic head, a higher magnetic permeability is desirable, but it is necessary to take off anisotropy of the magnetic film so as to gain the high magnetic permeability. Accordingly, the magnetic film must be heat treated in a temperature region which is higher than Tc and lower than Tx, so as to realize taking off the anisotropy of the magnetic film.

On the other hand, there are materials wherein the order of Tc into Tx is inversed, and such materials can not have high magnetic permeability by the normal heat treatment, so that a special heat treatment such as the heat treatment in a magnetic field is necessary to gain a high magnetic permeability. But such a special heat treatment is a problem in practice, and so the amorphous alloy shown in FIG.2 is normally used for a magnetic head.

When considering the manufacturing process of a magnetic head which uses amorphous alloy bonded by melted glass, at least two steps of heat treatment, namely the heat treatment process for bonding the substrate material and amorphous alloy, and the heat treatment process for making gap, are necessary. When considering looseness and movement of the glass, such a proper use as using a glass having a high softening temperature for bonding the substrate and amorphous alloy and using a glass having a low softening temperature for making the gap, is ideal, as far as such is possible. On the other hand, when considering taking off of anisotropy of the magnetic film, the temperature of the final heat treatment process of manufacturing of the magnetic head must be selected at least as high or higher than that of the heat treatment processes made before that.

The crystallization temperature Tx is generally about 500° C, and the Curie temperature Tc is above 450°C when considering the magnetic flux density as the magnetic head material, in practice. Accordingly, when considering the practical materials, at present only one which has a narrow temperature region between Tc and Tx and a working temperature lower than Tx is lead glass. In order to decrease the softening temperature of the glass, the content of lead in the glass may be increased. However, the glass becomes unstable due to the increase of the content of lead, and the mechanical strength becomes weak, so that it is impossible to decrease the softening temperature immoderately.

From the above-mentioned point of view, the glasses having a softening temperature about 400--500°C are used in practice for low melting point glass. The low melting point glass for bonding the substrate which is e.g. shown in WO-A-84/03167, is the same as that for gap making, or, even when glasses of different melting points are properly used for bonding the substrate and making the gap, the substrate-bonding glass layers may become loose during the gap making process because of the proximity of their softening temperatures due to the reasons shown in FIG.1. Therefore, there are problems, such as a low accuracy of gap length, core slippage and the decrease of yield of magnetic hood. FIG.1 schematically shows the magnified situation of looseness of glass layers and the like, but in actuality, they are in the order of micron displacement. In FIG.1, substrate 1 is bonded to the magnetic material 2 by the melted glass layer 3, and gap 4 is firmly maintained at its gap length. Crevice 5 is, however, brought by looseness of the melted glass layer 3.

On the other hand, there is a prior art wherein crystallized glass is applied to the gap part of a magnetic head (which is shown in Japanese patent unexamined publication Sho 55-108922), in this prior art, however, a glass composition obtained by the sputtering method may be shifted from the original composition, or sufficient bonding hardness can not be assured on rough surface except the gap surface because of the thinness of the glass film layer.

WO 84/03167 discloses a magnetic head comprising a non-magnetic substrate, two amorphous magnetic alloy layers formed thereon and a bonding glass layer isolated from the upper amorphous magnetic alloy layer by a non-magnetic ceramic layer. The amorphous ceramic layer is also firmly bonded to the sputtered layer.

Another magnetic head known from EP-A-0 106 321 comprises a core including two core halves made of amorphous magnetic material and being abutted against each other through a non-magnetic spacer. The core halves are held together by a set of reinforcing members applied onto opposite sides of the core.

## SUMMARY OF THE INVENTION

The conventional glass bonded magnetic head has many problems such as looseness of the glass layer during the gap making, discrepancy of the core alignment, insufficient manufacture yield of the magnetic head, low accuracy of the gap length, decrease of the output level of the magnetic head by adhering of magnetic powder from the magnetic tape on the crevice of the glass substrate, and the like.

The purpose of the present invention is to prevent such problems of the conventional magnetic head and to prepare the improved magnetic head by bonding the magnetic material and the substrate material by crystallized glass.

According to the invention there has been provided a magnetic head having the features of claim 1. Further advantageous examples of this magnetic head are indicated in the subclaims.

## BRIEF DESCRIPTION OF THE DRAWINGS

FIG.1 is the schematic front view of the conventional magnetic head showing the taps running surface.

FIG.2 is the characteristic curve showing the relation between the magnetization and the temperature of the amorphous alloy.

FIG.3(A), FIG.3(B), FIG.3(C), FIG.3(D) and FIG.3(E) are perspective views of preferred embodiments of the manufacturing process of a magnetic head in accordance with the present invention.

FIG.4 shows the characteristic curves of the output levels of a conventional magnetic head and a magnetic head in accordance with the present invention.

## DESCRIPTION OF THE PREFERRED EMBODIMENTS

A preferred embodiment of a magnetic head in accordance with the present invention is described with reference to the manufacturing process shown in FIG.3(A), FIG.3(B), FIG.3(C), FIG.3(D) and FIG.3(E).

As shown in FIG.3(A), an amorphous alloy film 9 as a soft magnetic metal film is formed on a mirror finished substrate surface 8 which is formed by high melting point glass on the market, by a sputtering type thin film manufacturing apparatus. A bonding glass layer 11 for bonding, (which is a glass crystallizable glass in the amorphous state containing e.g. PbO 62 %, ZnO 24 %, $B_2O_3$ 8 %, $SiO_2$ 5 % and $Al_2O_3$ 1 % of component ratio, respectively), is bonded on a surface of opposite substrate material 10. A range of 0. 1--10 µm is suitable for the thickness of the bonding layer. When considering the warp, bend or flatness of substrate materials, a thickness of at least 0.1 µm is necessary. On the other hand, it is difficult to attain uniformity of thickness of the substrate in operation in case that the thickness of the substrate is over 10 µm. In case of using a substrate material having superior resistance to wear, undesirable offset wear on the tape running surface may take place during the tape running due to the difference of resistances to wear of the bonding glass layer and the substrate substance. In this case, the powder of crystallizable glass (such as frit in the amorphous state having a softening temperature of 450°C) is used as glass material, and especially fine-grain of such crystallizable glass (for example, the diameter of the grain is smaller than 1 µm) is spreaded in a predetermined thickness. And it is baked for a few minutes at a relatively low temperature (480°C), wherein the glass can not be crystallized. Accordingly, the bonding glass layer 11 after the baking process is amorphous. Sputtering and vapor deposition are suitable for adhering the bonding glass 11, but they have some problems such as change of the characteristics of the glass caused by the discrepancy between the target component and that of the film, the necessity of adjustment for amending the discrepancy, and waste of time due to the slow film forming speed in case of a thickness of over 1 µm of the film.

Accordingly, the present invention adopted the spread and baking method. Then, the characteristics of the obtained metal film 9 were that the saturation magnetization Bs = 8,000 Gauss, the crystallization temperature Tx = 560°C, and the Curie temperature Tc = 450°C.

After that, as shown in FIG.3B, the substrate material 10 is put upon the substrate material 8 so that the amorphous alloy film 9 faces the glass layer 11, and then they are handed by heating at 490°C to make core blocks 12 and 12'. In this process, the bonding glass layer 11 is heated over its softening temperature. Since such glass has excellent wettability to amorphous metal alloy film, the bonding glass is crystallized by being held under the temperature of 490°C for a predetermined time. The crystallized bonding glass layer 11 has a softening temperature (as it is crystal, the softening temperature is the melting point) raised by about 100°C, so at a temperature of 490°C the characteristics of the glass may not be loosened.

Then a coil window 13 is formed on one of such core blocks 12 or 12'. A gap spacer film 14 and a bonding glass film 15 are formed on necessary parts of the core blocks 12 and 12' by using a thin film manufacturing technique such as sputtering or the like. As shown in FIG.3C, such core blocks 12 and 12' are bonded by heating, in a manner that the above-mentioned gap spacer film 14 is made to face the glass film 15. In this case, a bonding glass 16 on the top of the coil window 13 is melted down under the temperature of 490°C at the same time (gap forming process). In this process, the bonding of the core blocks 12 and 12' is made principally by the bonding glass 16, and work of the bonding glass film 15 is auxiliary. Therefore, use of an amorphous glass as the bonding glass film 15 is sufficient, and a crystallizable glass is not particulary necessary. That which was used as the bonding glass was an amorphous glass having a softening temperature of 400°C. As mentioned above, a gap 17 which is necessary for the magnetic head is formed, as shown in FIG.3(D). By cutting the core blocks to prescribed core thickness along the cutting line 18 and 18', and by forming a tape running surface 19, the head chip is. completed, as shown in FIG.3(D) and FIG.3(E).

Table 1 shows the total manufacturing yield of the magnetic head manufactured by the above-mentioned process. For information, the total yields of magnetic heads in case of using conventional amorphous glasses (which have softening temperatures of 450°C and 490°C respectively) for the bonding glass layer 11 are shown in Table 1 at the same time. In each case the temperature of making the core blocks 12 and 12' and the temperature of the gap forming are respectively equal.

Table 1

| | In the present invention | Using conventional amorphous glass having softening temperature of | |
|---|---|---|---|
| | | 450°C | 490°C |
| Yield of magnetic head manufacturing | 99 % | 53 % | 35 % |

As shown in Table 1, by using the present invention, the total manufacturing yield of the magnetic head was progressively increased. The low total yields of the magnetic head using conventional amorphous glass were caused mainly by insufficiency of bonding due to the loosing of glass during the gap forming in the case of a softening temperature of 450° C, and mainly by peeling off of the substrates 8 and 10 due to the bonding imperfection in case of a softening temperature of 490° C.

FIG.4 shows characteristic curves of the change of output levels of the conventional magnetic head and the magnetic head in accordance with the present invention in the repetition of the tape running. The output level of the magnetic head in accordance with the present invention does not change even after many repetitions of tape running, but the conventional magnetic head (wherein the bonding glass layer has a softening temperature of 450° C) has the looseness of bonding glass layer as mentioned above, a crevice between the amorphous alloy film 9 and the substrate 10 was produced, and magnetic powder from the tape adheres on the crevice, and the output of the magnetic head decreases as a result of spacing loss caused by such adhering. The degree of adhering of magnetic powder from the tape changes responding to the repetition times of tape running, so that the output of the magnetic head also changes in proportion to the repetition of tape running.

As mentioned above, an embodiment using a sputtering method for forming an amorphous alloy film has been described. The method for forming an amorphous alloy film is not limited only to sputtering, but it can be formed by a vapor deposition method, or the like. Furthermore, such an amorphous alloy film can be replaced by a ribbon type amorphous made by a melt quenching method. In this case, the constitution of the magnetic head is that a pair of bonding glass layers are disposed on both sides of the magnetic material of the ribbon type amorphous. The pair of bonding glass layers are corresponding to part 3 in FIG.1 and the ribbon type amorphous is corresponding to part 2 in FIG.1.

For the amorphous alloy film, amorphous magnetic metal films composed of metal-metal systems such as Co-M (where M is a metal element such as Nb, Ti, Ta, Zr, W or the like) or Co-$M_1$-$M_2$ ($M_1$, $M_2$ are the metal elements mentioned above), are preferable because of their high magnetic permeability and their superior resistance to wear and high crystallization temperature. However, amorphous magnetic metal films composed of metal-metalloid systems such an Co-Fe-Si-B or Ni-Si-B which are containing elements of Si, B, C, P or the like, are also available if the films are sandwiched with the substrate of the present invention.

Stability of the gloss bonding is enhanced by the increase of hardness and the rise of the softening temperature of the glass which are caused by the crystallization of the original glass.

The characteristics of crystallized glass are mainly fixed by the variation of precipitated crystal, so that the components and the temperature of heat treatment are decided so as to obtain a desirable crystal for the use of crystallized glass.

Principal crystals actually usable for crystallized glass are such as β-eucryptite ($Li_2O$-$A;_2O_3$•$2SiO_2$), β-spodumene ($Li_2O$•$Al_2O_3$•$4SiO_2$), quartz ($SiO_2$), lithium metasilicate ($Li_2O$•$SiO_2$), lithium disilicate ($Li_2O$•$2SiO_2$), rutile ($TiO_2$), corodierite ($2MgO$•$2Al_2O_3$•$5SiO_2$), gahnite ($ZnO$•$Al_2O_3$), willemite ($2ZnO$•$SiO_2$), fluorine-contained phlogopite ($NaMg_3(Si_3AlO_{10})F_2$), and the like. Accordingly, the components of the crystallized glass may be selected by considering the characteristics of these crystals.

As mentioned above, the present embodiment is described by using the amorphous alloy film of a single layer structure, but use of a laminated type core, wherein the magnetic material and the insulating material are alternately laminated, is more superior to prevent eddy current loss. The present invention can also be adopted to another magnetic metal film such as sendust alloy or the like.

As a result of bonding the magnetic material and the substrate material by crystallized glass in the magnetic head having a sandwiched constitution of magnetic material between the substrates on both sides the bonding of such a magnetic material and substrate becomes stable, and loosing of the bonding glass layer does not occur during the gap making step. Furthermore, the total yield of the magnetic head in the manufacturing process can be progressively improved, and the output of the magnetic head can be stable bacause of the extinction of adhering of the magnetic powder of the tape during the tape running.

The above-mentioned embodiment is described as an amorphous magnetic film formed on one of the non-magnetic substrate materials, however, it is needless to say that a pair of amorphous magnetic films respectively formed on a pair of non-magnetic substrate materials are also superior to apply on the present invention.

**Claims**

**1.** A magnetic head comprising two core blocks (12) and (12') bonded together by a gap spacer film (14) and a bonding glass film (15), each core block having amorphous magnetic film (9) sandwiched thereof by a pair of amorphous substrate materialS (8, 10), characterised in that

the amorphous magnetic material (9) and at least one of the substrate materials are bonded by crystallized glass.

2. The magnetic head in accordance with claim 1, characterised in that said substrate materials (8,10) are non-magnetic substrate materials and that said crystallized glass (11) has, in the amorphous state, a softening temperature lower than the crystallizing temperature of the amorphous magnetic film, and after crystallization, a melting temperature higher than the temperature of heat treatment effected after the crystallization process of the glass.

3. The magnetic head in accordance with claim 2, wherein
the thickness of the crystallized glass layer (11), which is bonding the amorphous magnetic film (9) and the non-magnetic substrate material (10), is in the region between 0.1 to 10 µm.

4. The magnetic head in accordance with claim 2, wherein
the amorphous magnetic film (9) is formed on one of the non-magnetic substrate material (8) by sputtering.

5. The magnetic head in accordance with claim 4, wherein
the amorphous magnetic film formed (9) by sputtering is an amorphous alloy composed of metal-metal system alloy.

6. The magnetic head in accordance with claim 1, characterised in that each core block have a pair of amorphous magnetic films (9) respectively formed on a pair of non-magnetic substrate materials (8,10), that
the amorphous magnetic films (9) are formed by a thin film manufacturing apparatus, and that
said pair of the non-magnetic substrate materials are bonded by crystallized glass for facing of the pair of amorphous magnetic films each other.

**Revendications**

1. Tête magnétique comprenant deux blocs de noyaux (12) et (12') liés l'un à l'autre par un film séparateur d'entrefer (14) et par un film de verre de liaison (15), chaque bloc de noyau ayant un film magnétique amorphe (9) pris en sandwich par une paire de matériaux de substrat amorphes (8, 10), caractérisée en ce que :
   - le matériau magnétique amorphe (9) et au moins l'un des matériaux de substrat sont liés par du verre cristallisé.

2. Tête magnétique selon la revendication 1, caractérisée en ce que lesdits matériaux de substrat (8, 10) sont des matériaux de substrat non magnétiques et en ce que ledit verre cristallisé (11) a, à l'état amorphe, une température de ramollissement inférieure à la température de cristallisation du film magnétique amorphe, et après cristallisation, une température de fusion supérieure à la température du traitement thermique effectué après l'opération de cristallisation du verre.

3. Tête magnétique selon la revendication 2, dans laquelle :
   - l'épaisseur de la couche de verre cristallisé (11) qui lie le film magnétique amorphe (9) au matériau de substrat non magnétique (10), est dans l'intervalle de 0,1 à 10 µm.

4. Tête magnétique selon la revendication 2, dans laquelle :
   - le film magnétique amorphe (9) est formé sur l'un des matériaux de substrat non magnétiques (8) par pulvérisation.

5. Tête magnétique selon la revendication 4, dans laquelle :
   - le film magnétique amorphe formé (9) par pulvérisation est un alliage amorphe composé d'un alliage de type métal-métal.

6. Tête magnétique selon la revendication 1, caractérisée en ce que chaque bloc de noyau présente une paire de films magnétiques amorphes (9) respectivement formés sur une paire de matériaux de substrat non magnétiques (8, 10), en ce que
   - les films magnétiques amorphes (9) sont formés par un dispositif de fabrication de films minces, et en ce que :
   - ladite paire de matériaux de substrat non magnétiques est liée par du verre cristallisé pour orienter l'un vers l'autre les deux films magnétiques amorphes.

## Patentansprüche

1. Magnetkopf, umfassend zwei Kernblöcke (12) und (12'), die mittels eines Spaltabstandsfilms (14) und eines Glas-Bindungsfilms (15) aneinandergebunden sind, wobei jeder Kernblock einen amorphen magnetischen Film (9) hat, der zwischen einem Paar von amorphen Substratmaterialien (8, 10) angeordnet ist, dadurch **gekennzeichnet**,

   daß das amorphe magnetische Material (9) und wenigstens eines der Substratmaterialien mittels kristallisiertem Glas aneinandergebunden sind.

2. Magnetkopf nach Anspruch 1, dadurch gekennzeichnet, daß die Substratmaterialien (8,10) nichtmagnetische Substratmaterialien sind und daß das kristallisierte Glas (11) im amorphen Zustand eine Erweichungstemperatur hat, die niedriger als die Kristallisationstemperatur des amorphen magnetischen Films ist, und nach der Kristallisation eine Schmelztemperatur hat, die höher als die Temperatur der Wärmebehandlung ist, die nach der Kristallisation des Glases durchgeführt worden ist.

3. Magnetkopf nach Anspruch 2, wobei

   die Dicke der Schicht (11) aus kristallisiertem Glas, welche den amorphen magnetischen Film (9) und das nichtmagnetische Substratmaterial (10) aneinanderbindet, im Bereich zwischen 0,1 bis 10 $\mu$m liegt.

4. Magnetkopf nach Anspruch 2, wobei

   der amorphe magnetische Film (9) durch Sputtern bzw. Aufsprühen an einem (8) der nichtmagnetischen Substratmaterialien gebildet ist.

5. Magnetkopf nach Anspruch 4, wobei

   der durch Sputtern oder Aufsprühen gebildete amorphe magnetische Film (9) eine amorphe Legierung ist, die aus einer Metall-Metall-Systemlegierung zusammengesetzt ist.

6. Magnetkopf nach Anspruch 1, dadurch gekennzeichnet,

   daß jeder Kernblock ein Paar von amorphen magnetischen Filmen (9) hat, die jeweils an einem Paar von nichtmagnetischen Substratmaterialien (8, 10) gebildet sind,

   daß die amorphen magnetischen Filme (9) durch eine Vorrichtung zum Herstellen eines dünnen Films gebildet sind, und

   daß das Paar der nichtmagnetischen Substratmaterialien durch kristallisiertes Glas gebunden sind derart, daß das Paar von amorphen magnetischen Filmen einander zugewandt ist.

F I G.1

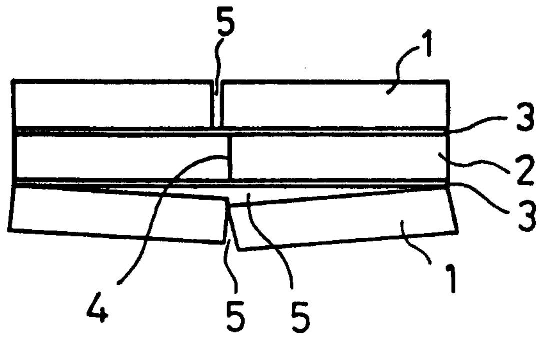
5
1
3
2
3
4
5
5
1

F I G.2

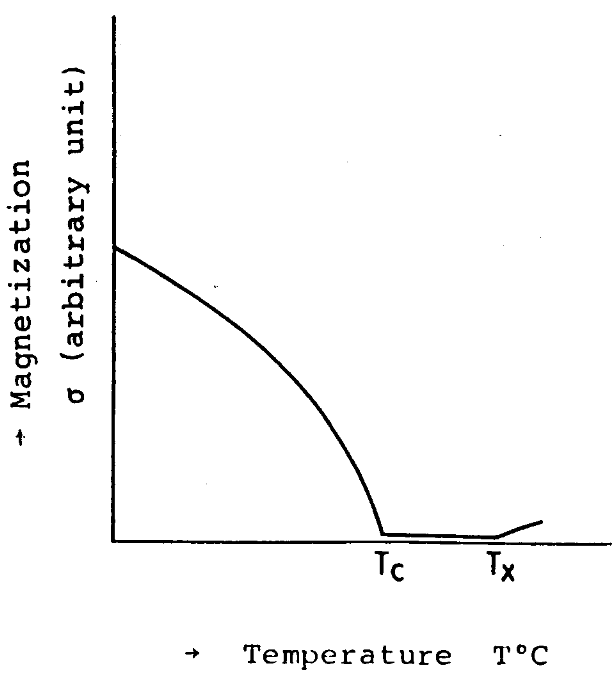
→ Magnetization
σ (arbitrary unit)
Tc
Tx
→ Temperature T°C

FIG.3(A)

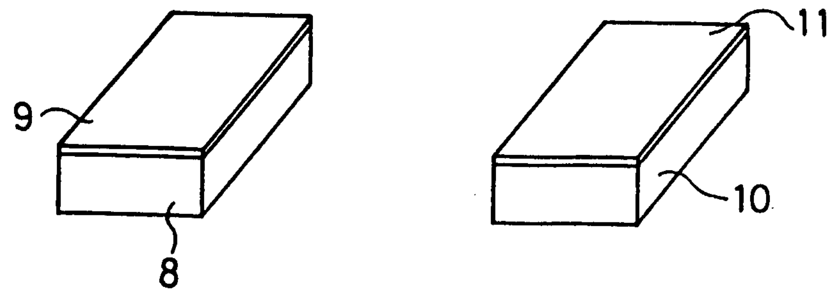


FIG.3(B)

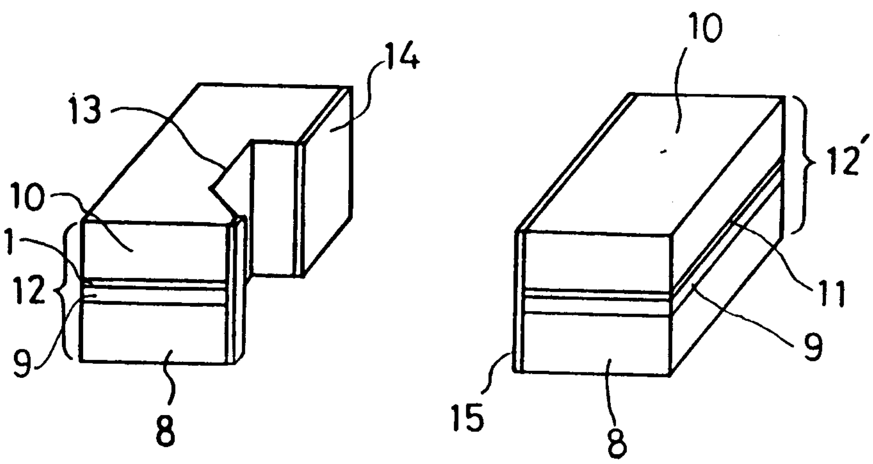


FIG.3(C)

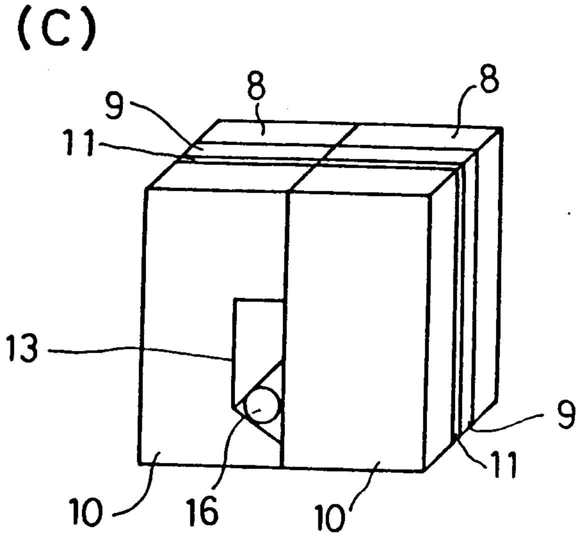

FIG. 3 (D)

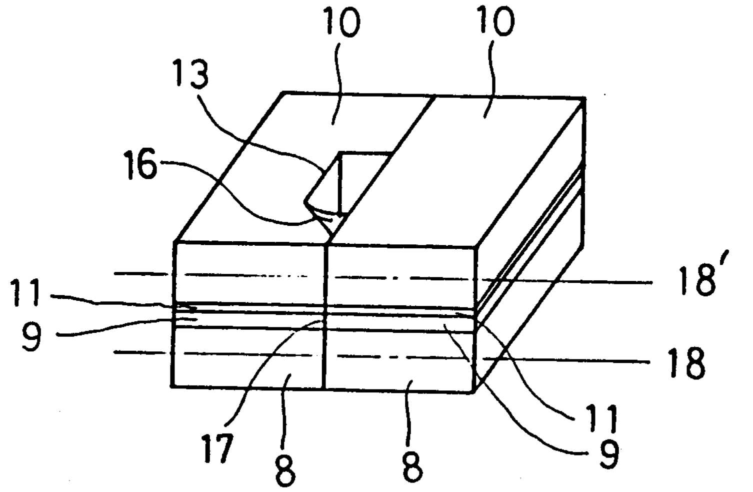


FIG. 3 (E)

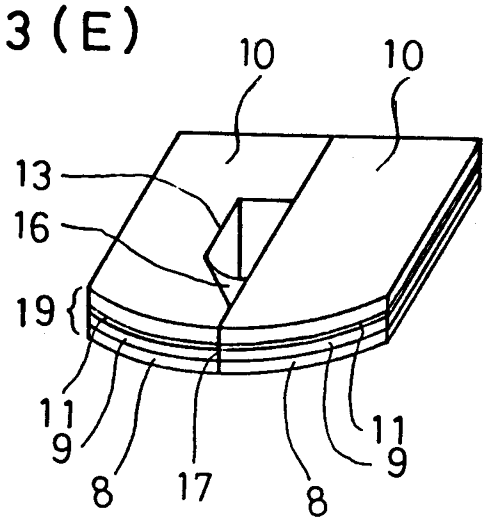

FIG. 4

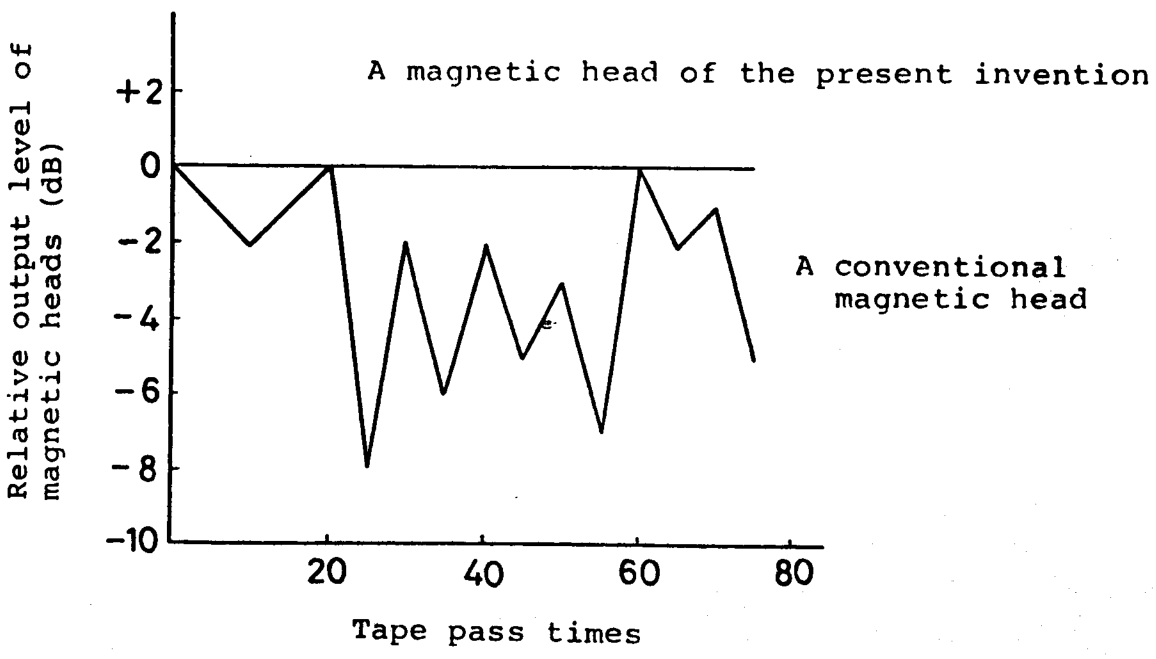
A magnetic head of the present invention
A conventional magnetic head
Relative output level of magnetic heads (dB)
+2
0
-2
-4
-6
-8
-10
20
40
60
80
Tape pass times